# EUROPEAN PATENT APPLICATION

(11) **EP 1 837 553 A2**
(43) Date of publication of application: **26.09.2007**
(21) Application number: 07006040.5
(22) Date of filing: 23.03.2007
(51) Int. Cl.: F16H 3/00

(54) **Dual clutch transmission apparatus**

(30) Priority: 23.03.2006 JP 2006080474
(71) Applicant: AISIN AI Co., Ltd., Nishio-shi, Aichi-ken (JP)
(72) Inventor: Hatori, Hiroki, Nishio-shi Aichi-ken (JP); Ogami, Shiro, Nishio-shi Aichi-ken (JP); Tanba, Toshio, Nishio-shi Aichi-ken (JP); Kawamoto, Masaki, Nishio-shi Aichi-ken (JP)
(74) Representative: Marshall, John Grahame

(57) **Abstract**

A dual clutch transmission apparatus includes a first input shaft (15), a second input shaft (16), a first counter shaft (17), a second counter shaft (18), an output shaft (19), a dual clutch (12) including a first clutch (C1) transmitting rotation of a driving shaft (11) which is driven by a power plant (10), a second clutch (C2) transmitting rotation of the driving shaft, a final transmission gear train (29a, 29b) transmitting rotation of the first counter shaft to the output shaft, a first gear change mechanism (20A), a second gear change mechanism (20B), a switching clutch (30A) connecting the first input shaft to the output shaft; and an intermediate transmission gear train (26a, 26b) transmitting rotation between the first input shaft and the second counter shaft, wherein the first and second gear change mechanisms share a common driving gear (22a (28a), 24a (25a), 36a (28a), 22a (28a), 24a (25a)).

## Description

### FIELD OF THE INVENTION

This invention relates to a dual clutch transmission apparatus, more specifically, to a dual clutch type transmission apparatus which is suitably used for a front engine rear wheel drive vehicle.

### BACKGROUND

Automatic transmission apparatus for a vehicle have been widely known to be provided with a fluid-type torque converter. However, such fluid-type torque converter may suffer from slippages when transmitting power, leading to a loss of transmission efficiency. In light of the foregoing, automation of a transmission apparatus that includes a gear-type manual transmission has been suggested. In dual clutch transmission apparatuses suitable for a front engine rear wheel drive vehicle, the input shaft, to which the power from the engine is transmitted, and the output shaft, which is connected to the rear wheels, are arranged coaxially and serially relative to each other. As one of the examples, JP2003-148602A (Reference 1, paragraphs 18-21, Fig. 2) discloses a dual clutch transmission apparatus having a dual clutch mechanism, i.e., having an automatic clutch mechanism of two friction clutches that are engaged or disengaged in turns.

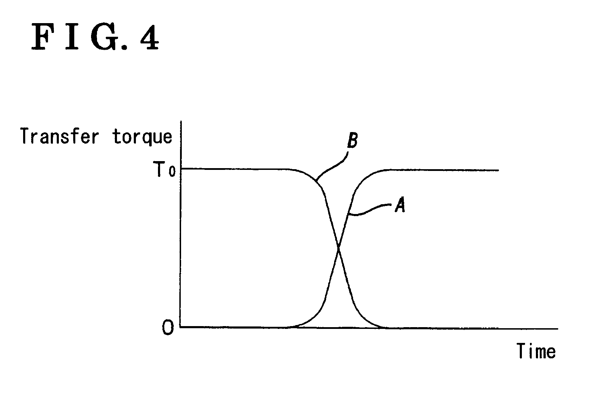

In this dual clutch transmission apparatus, an input, which is transmitted from a drive shaft such as an output shaft of an engine, is first transmitted to a first input shaft via a first friction clutch of the dual clutch, and then is transmitted to a second input shaft of a hollow shape via a second friction clutch. The second input shaft is arranged at a peripheral portion of the first input shaft so as to be coaxial with the first input shaft. As being explained in Fig. 4, the first and second friction clutches of the dual clutch are controlled in a manner that the torque A and the torque B increase and decrease reversely from each other, and when the torque A reaches the maximum torque value T0, the torque B falls down to zero, and vice versa. In the case that the revolution speed of the engine is less than or equal to a predetermined low revolution speed, the first and second friction clutches are controlled so as to reduce both torque A and torque B. This gear change mechanism includes a counter shaft arranged in parallel with the first and second input shafts. Arranged between the second input shaft and the counter shaft are multiple gear trains that are actuated to establish a 1 st shift stage, a 3rd shift stage and a 5th shift stage, respectively. Arranged between the first input shaft and the counter shaft are multiple gear trains that are actuated to establish a 2nd shift stage, a 4th shift stage, a reverse shift stage and a low-speed shift stage for emergency. There are also four switching clutches housed in the transmission to switch the shift stages. The counter shaft is connected to an output shaft, which extends coaxially with the first input shaft in a rearward direction of the transmission, via a final transmission gear train.

A control unit of this dual clutch transmission apparatus controls the first friction clutch and the second Sectional clutch to be engaged or disengaged in turns. The operations of the first and second frictional clutches are responsive to an operational state of a vehicle, such as an accelerator opening degree, a revolution speed of an engine (rpm), a vehicle speed, or the like, When the second friction clutch is controlled to an engaged state, one of the 1st, 3rd and 5th shift stages is selected and power transmission in accordance with the selected shift stage is implemented. When the first frictional clutch is controlled to an engaged state, one of the 2nd shift stage, the 4th shift stage, the reverse shift stage and the low-speed shift stage for emergency is selected and power transmission in accordance with the selected shift stage is implemented. For example, when an operational state of a vehicle is suitable for driving of the vehicle in the 2nd shift stage, the control unit selects the 2nd shift stage gear train and the first friction clutch so that the driving of the vehicle in the 2nd shift stage is achieved. When the operational state of the vehicle is suitable for the driving of the vehicle in the 3rd shift stage for example with an accelerator opening degree increased, the control unit selects the 3rd shift stage gear train and the second friction clutch so that the driving of the vehicle in the 2nd shift stage is changed to the driving of the vehicle in the 3rd shift stage. Likewise, the control unit selects either the first friction clutch of the second friction clutch in turns as well as selecting a gear train suitable for the operational state of the vehicle, wherein the vehicle drives in a shift stage suitable for the operational state of the vehicle. When a speed of a vehicle declines while the vehicle is in motion in the 1 st shift stage, the control unit selects the low shift stage gear train for emergency and the first faction clutch so that a driving mode of the vehicle is changed to a low-speed driving mode for emergency/a low speed shift stage for emergency. Described above is relevant to driving of a vehicle with a shift lever placed in a position for vehicle forward movement Once the shift lever is placed for vehicle rearward movement in a situation where the vehicle is stationary, the control unit selects the reverse shift stage gear train and the first friction clutch so that the vehicle moves rearward.

In the dual clutch transmission apparatus disclosed in Reference 1, the output shaft is arranged on the same axis as the first input shaft, and is applicable for the use in a front-engine rear wheel drive vehicle (FR vehicle). JP2006-002789 (Reference 2, paragraphs 3-9, Fig. 8) discloses a dual clutch transmission apparatus with a dual clutch mechanism, which apparatus is applicable for use in a front engine front drive vehicle (FF vehicle). The dual clutch transmission apparatus (Reference 2) is different from the aforementioned apparatus (Reference 1) in which that, in the dual clutch transmission (Reference 2), a first intermediate shaft and a second intermediate shaft are arranged in parallel with first and second input shafts. Mounted between the first input shaft and the first and second intermediate shafts is a first gear change mechanism having multiple gear trains for the 1st shift stage, the 3rd shift stage, the 5th shift stage and the 7th shift stage. Mounted between the second input shaft and the first and second intermediate shafts is a second gear change mechanism having multiple gear trains for the 2nd shift stage, the 4th shift stage and the 6th shift stage. Mounted between the first input shaft and the second intermediate shaft is a reverse shift stage gear train.

According to the apparatus disclosed in Reference 1, mounted on the two input shafts, the output shaft and the counter shaft are the eight gear trains for the 1 st shift stage, the 2nd shift stage, the 3rd shift stage, the 4th shift stage, the 5th shift stage, the low-speed shift stage for emergency, the reverse shift stage and the final transmission gear train, and the four switching clutches. These components are all arranged in series along the axis. As a result, the length of the axis of the gearbox is enlarged, and the number of gears is increased with respect to the number of shift stages. Mores specifically, the total amount of the gears is seventeen with respect to the six forward and single reverse shift stages. Meanwhile, in the apparatus disclosed in Reference 2, mounted on the two input shafts, the single output shaft and the two intermediate shafts arranged in parallel therewith are nine gear trains for the 1st shift stage, the 2nd shift stage, the 3rd shift stage, the 4th shift stage, the 5th shift stage, the 6th shift stage, the 7th shift stage, the reverse shift stage and the final transmission gear train, and the four switching clutches. The components, which are partially arranged in parallel, are all arranged along in series along the axis. As a results although the length of the axis of the gearbox is shortened, the number of gears is still large with respect to the number of shift stages. More specifically, the total quantity of the gears is nineteen with respect to the seven forward and single reverse shift stages.

The present invention has been made in view of the above circumstances, and provides a dual clutch transmission apparatus suitable for the front engine rear wheel drive vehicle which enables to decrease the number of gears by sharing the gears between each shift stage to simplify the structure of the dual clutch transmission apparatus and to reduce weight and size of the apparatus.

### SUMMARY OF THE INVENTION

According to an aspect of the present invention, a dual clutch transmission apparatus includes a first input shaft, a second input shaft arranged in parallel with the first input shaft, a first counter shaft arranged in parallel with the first input shaft, a second counter shaft arranged in parallel with the first input shaft, an output shaft arrange coaxially with the first input shaft, a dual clutch including a first clutch transmitting rotation of a driving shaft which is driven by a power plant to the first input shaft, a second clutch transmitting the rotation of the driving shaft to the second input shaft, a final transmission gear train transmitting rotation of the first counter shaft to the output shaft, a first gear change mechanism including multiple gear trains and provided between the second input shaft and the second counter shaft, a second gear change mechanism including multiple gear trains and provided between the first input shaft, the second input shaft and the first counter shaft, a switching clutch detachably connecting the first input shaft to the output shaft, and an intermediate transmission gear train transmitting rotation between the first input shaft and the second' counter shaft, wherein the first gear change mechanism and the second gear change mechanism share a common driving gear provided at the second input shaft.

According to the aforementioned embodiment of the invention, the output shaft is coaxially arranged with the first input shaft and thus it is possible to obtain the dual clutch type transmission apparatus which is suitable for the front engine rear wheel drive vehicle. The driving force transmitted to the second input shaft is transmitted to the first and second counter shafts through the common driving gears and the driving force transmitted to the second input shaft is transmitted to the first input shaft through the common intermediate transmission gear train. Further, the first input shaft and the output shaft are detachably connected by the switching clutch, and thus the number of the gears is decreased. Therefore, it is possible to simplify the structure of the dual clutch transmission apparatus and reduce the weight. Furthermore, the two counter Shafts are provided and thus at least a part of the gear trains can be arranged in parallel in the axial direction to shorten the length along the axial direction. Therefore, it is possible to assemble the dual clutch transmission apparatus compactly.

### BRIEF DESCRIPTION OF THE DRAWINGS

The foregoing and additional features and characteristics of the present invention will become more apparent from the allowing detailed description considered with reference to the accompanying drawings, wherein:

Fig.1 is a skeleton diagram showing an overall structure of a dual clutch transmission apparatus according to a first embodiment of the present invention;

Fig.2 is a sectional view illustrating an example of a switching clutch used for the first embodiment;

Fig.3 is a view explaining shift operation of the first embodiment;

Fig.4 is a view explaining operation of a dual clutch used for the dual clutch transmission apparatus;

Fig.5 is a skeleton diagram showing an overall structure of a dual clutch transmission apparatus according to a second embodiment of the present invention;

Fig.6 is a view explaining shift operation of the second embodiment; and

Fig.7 a skeleton diagram showing an overall structure of a dual clutch transmission apparatus according to a third embodiment of the present invention.

### DETAILED DESCRIPTION

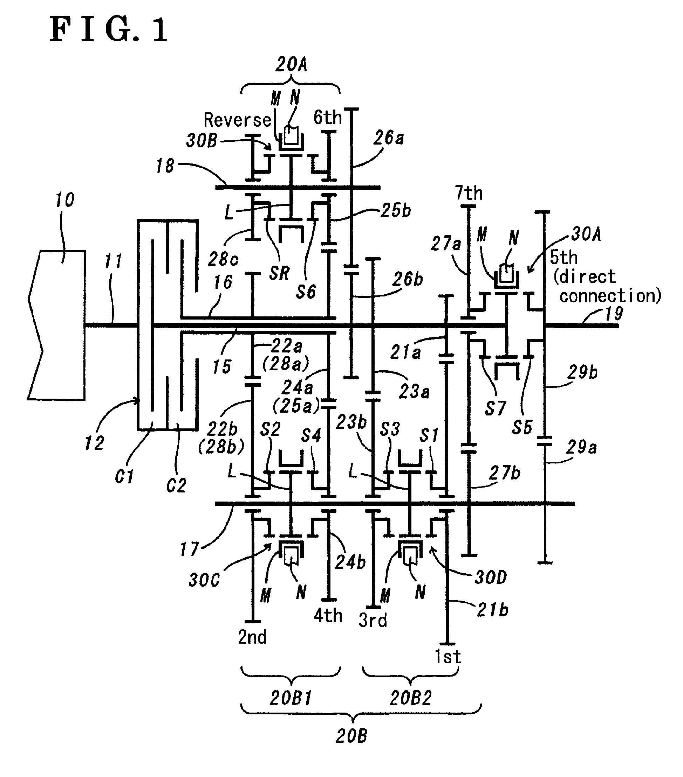

A first embodiment of a dual clutch transmission apparatus of the present invention will be described below with reference to Figs 1 to 4. In the first embodiment, the present invention is applied to a dual clutch transmission apparatus having seven forward shift stages and two reverse shift stages. As mainly shown in Fig.1, the dual clutch transmission apparatus has a first input shaft 15, a hollow second input shaft 16 which is rotatably provided so as to enclose the first input shaft 15 coaxially. The transmission apparatus further includes first and second counter shafts 17 and 18 which are arranged in parallel with the first and second input shafts 15 and 16, and an output shaft 19. The output shaft 19 extends toward the rear of the transmission apparatus coaxially with the first input shaft 15 which penetrates the hollow second input shaft 16 to protrude toward the rear of the transmission apparatus. The first and second input shafts 15 and 16 are respectively connected to a first friction clutch (first clutch) C1 and a second friction clutch (second clutch) C2 of a dual clutch 12 to be driven for rotation. The dual clutch 12 is driven to rotate by a power plant 10 such as an engine via a driving shaft 11.

The first input shaft 15 and the output shaft 19 are coaxially arranged relative to each other and a first switching clutch (switching clutch) 30A is provided therebetween. The first switching clutch 30A detachably connects the shifts 15 and 19. A first gear change mechanism 20A is provided between the second input shaft 16 and the second counter shaft 18 and a second gear change mechanism 20B is provided between the first, second input shafts 15 and 16 and the first counter shaft 17. Moreover, the first input shaft 15 and the second counter shaft 18 are connected by an intermediate transmission gear train 26a, 26b and the first counter shaft 17 and the output shaft 19 are connected by a final transmission gear train 29a, 29b. The first friction clutch C1 and the second friction clutch C2 of the dual clutch 12 are controlled by a control unit (not shown) of the dual clutch transmission apparatus. More specifically, the first and second friction clutches C1 and C2 are controlled as shown in Fig.4 in a normal operation state. In the middle of the shifting, the clutches are partially engaged and transfer torque A and transfer torque B increase and decrease reversely from each other. After the completion of the shifting, the clutches are controlled so that either one of the torques reaches a predetermined maximum value T0 and the other torque decreases to 0. When a revolution speed of the engine is less than or equal to a predetermined low revolution speed, then the clutches are controlled so that both transfer torque A and transfer torque B are decreased to 0.

The first transmission gear mechanism 20A is structured by a 6th shift stage gear train which is composed of a driving gear 25a and a driven gear 25b, a reverse shift stage gear train which is composed of a driving gear 28a; an idle gear 28b, a driven gear 28o, and a second switching clutch 30B. The driving gear 25a is fixed to the second input shaft 16 and the driven gear 25b is rotatably provided at the second counter shaft 18. The driving gear 28a is fixed to the second input shaft 16, the idle gear 28b and the driven gear 28c are rotatably provided at the first counter shaft 17 and the second counter shaft 18 respectively.

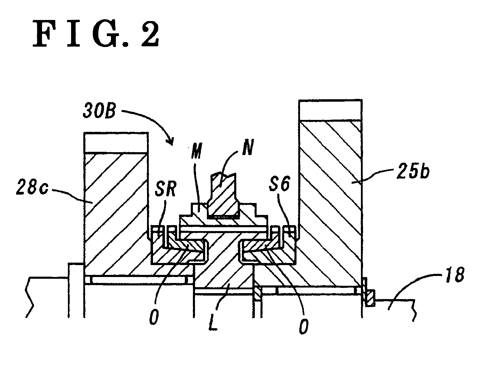

As shown in Figs 1 and 2, the second switching clutch 30B is configured by a clutch hub L, a 6th shift stage engaging member S6, a reverse shift stage engaging member SR, synchronizer rings O, and a sleeve M. The clutch hub L is fixed to the second counter shaft 18 through a spline. The sixth engaging member S6 and the reverse shift stage engaging member SR are respectively fixed to the 6th shift stage driven gear 25b and the reverse shift stage driven gear 28c by press fitting. One synchronizer ring is interposed between the clutch hub L and the engaging member S6 which is located at a right side and the other synchronizer ring is interposed between the clutch hub L and the engaging member SR which is located at a left side. The sleeve M is engaged with an outer periphery of the clutch huh L through a spline so as to be movable in an axial direction. The second switching clutch 30B is a known synchromesh mechanism in which the driven gears 25b and 28c are detachably connected to the second counter shaft 18 either alternately or simultaneously. In a neutral position shown in Fig.2, the sleeve M of the second switching clutch 30B is neither engaged with the engaging member S6 not with the engaging number SR. However, when the sleeve M is shifted toward the 6th shift stage driven gear 25b by a shift fork that is engaged with an annular groove on an outer periphery of the sleeve M, then the sleeve M is engaged with the synchronizer ring on the side through a spline to synchronize the rotations of the second counter shaft 18 and the 6th shift stage driven gear 25b. Subsequently, the sleeve M is engaged with an external spline of an outer periphery of the 6th shift stage engaging member S6 and forms the 6th shift stage by integrally connecting the second counter shaft 18 and the 6th shift stage driven gear 25b. Also, if the sleeve M is shifted toward the reverse shift stage driven gear 28c by the shift fork N, then the sleeve M integrally connects the second counter shaft 18 with the reverse shift driven gear 28c after synchronizing the rotations of the second counter shaft 18 and the reverse shift driven gear 28c to form the reverse shift stage.

The second gear change mechanism 20B is structured by a third gear change mechanism 20B1 and a fourth gear change mechanism 20B2. The third gear change mechanism 20B1 is provided between the second input shaft 16 and the first counter shaft 17 and the fourth gear change mechanism 20B2 is provided between the first input shaft 15 and the first counter shaft 17. Further, the second gear change mechanism 20B has a 7th shift stage gear train which is composed of a driving gear 27a and a driven gear 27b and is provided between the first input shaft 15 and the first counter shaft 17, The driving gear 27a is rotatably provided at a rear portion of the first input shaft 15 and the driven gear 27b is fixed to the first counter shaft 17.

The third gear change mechanism 20B1 is structured by a 2nd shift stage gear train which is composed of a driving gear 22a and a driven gear 22b, a 4th shift stage gear which is composed of a driving gear 24a and a driven gear 24b, and a third switching clutch 30C. The driving gear 22a (also serving as the reverse shift stage driving gear 28a) is fixed to the second input shaft 16 and the driven gear 22b is rotatably provided at the first counter shaft 17. The driving gear 24a (also serving as the 6th shift stage driving gear 25a) is fixed to the second input shaft 16 and the driven gear 24b is rotatably provided at the first counter shaft 17. The third switching clutch 30C is a known synchromesh mechanism in which the respective driven gears 22b and 24b are detachably connected to the first counter shaft 17 either alternately or simultaneously. Structure of the third switching clutch 30C is identical to that of the aforementioned second switching clutch 30B with the exception that a clutch hub L is fixed to the first counter shaft 17 and a 2nd shift stage engaging member 82 and a 4th shift stage engaging member S4 are respectively fixed to the driven gears 22b and 24b. Similarly to the second switching clutch 30B, the third switching clutch 30C is neither engaged with the engaging member 92 nor with the engaging member S4 in a neutral position shown in Fig,2. However, when a sleeve M' is shifted toward the 2nd shift stage driven gear 22b by a shift fork N, the rotations of the first counter shaft 17 and the 2nd shift stage driven gear 22b are synchronized and then the first counter shaft 17 and the 2nd shift stage driven gear 22b are integrally connected to form the 2nd shift stage. Also, if the sleeve M is shifted toward the 4th shift stage driven gear 24b by the shift fork N, the rotations of the first counter shaft 17 and the 4th shift stage driven gear 24b are synchronized, then the first counter shaft 17. and the 4th shift stage driven gear 24b are integrally connected to form the 4th shift stage.

The fourth gear change mechanism 20B2 is structured by a 1st shift stage gear train which is composed of a driving gear 21a and a driven gear 21b, a 3rd shift stage gear train which is composed of a driving gear 23a and a driven gear 23b, and a fourth switching clutch 30D. Nearly identical to the case of the respective gear change mechanisms 20A and 20B1, the driving gear 21a is fixed to the first input shaft 15 and the driven gear 21b is rotatably provided at the first counter shaft 17. The third driving gear 23a is fixed to the first input shaft 15 and the driven gear 23b is rotatably provided at the first counter shaft 17. The fourth switching clutch 30D is a synchromesh mechanism in which the respective driven gears 21b and 23b are detachably connected to the first counter shaft 17 either alternately or simultaneously. The fourth switching clutch 30D is identical to the third switching clutch 30C with the exception that a 1st shift stage engaging member S1 and a 3rd shift stage engaging member S3 are respectively fixed to the driven gears 21b and 23b. The fourth switching clutch 30D is neither engaged with the engaging member S1 nor the engaging member S3 in a neutral position shown in Fig.2. However, when a sleeve M is shifted toward the 1st shift stage driven gear 21b by a shift fork N, the rotations of the first counter shaft 17 and the 1st shift stage driven gear 21b are synchronized, then the first counter shaft 17 and the 1st shift stage driven gear 21b are integrally connected to form the 1st shift stage. Also, if the sleeve M is shifted toward the 3rd shift stage driven gear 23b, the rotations of the first counter shaft 17 and the third driven gear 23b are synchronized, then the first counter shaft 17 and the 3rd shift stage driven gear 23b are integrally connected to form the 3rd shift stage.

In the first embodiment, the switching clutches 30B of the gear change mechanism 20A is provided at a side of the second counter shaft 18 and the switching clutches 30C and 30D of the respective gear change mechanisms 20B1 and 20B2 are provided at a side of the first counter 17. However, the clutches 30B, 30C, and 30D may be provided at a side of the first and second input shafts 15 and 16.

The first switching clutch 30A is provided between the driving gear 27a of the 7th shift stage gear train, which is rotatably provided at the rear portion of the first input shaft 15, and a driven gear 29b of the final transmission gear train. The driven gear 29b of the final transmission gear train is arranged coaxially with the driving gear 27a and fixed to a front end of the output shaft 19. The first switching clutch 30A is a synchromesh mechanism, whose structure is identical to that of the second switching clutch 30B with the exception that a clutch hub L is fixed to the rear end of the first counter shaft 15 and a 5th shift stage engaging member S5 and a 7th shift stage engaging member S7 are respectively fixed to the final transmission driven gear 29b and the 7th shift stage driving gear 27a. The first switching clutch 30A is neither engaged with the engaging member S5 nor with the engaging member S7 in a neutral position shown in Fig.2. However, when a sleeve M is shifted toward the final transmission driven gear 29b by a shift fork N, the rotations of the first input shaft 15 and the output shaft 19 are synchronized, then the first input shaft 15 and the output shaft 19 are directly connected to form a 5th shift stage. Also, if the sleeve M is shifted toward the 7th shift stage driving gear 27a, the rotations of the first input shaft 15 and the 7th shift stage driving gear 27a are synchronized, then the first input shaft 15 and the 7th shift stage driving gear 27a are integrally connected to form a 7th shift stage.

The numbers of teeth of the respective gears which are used in each above-described shift stage, the reverse shift stage, the intermediate transmission, and the final transmission are set so that gear ratios of each gear stages and the reverse shift stage are equal to predetermined values. The gear ratio equals to one in the 5th shift stage because the first input shaft 15 and the output shaft 19 are directly connected.

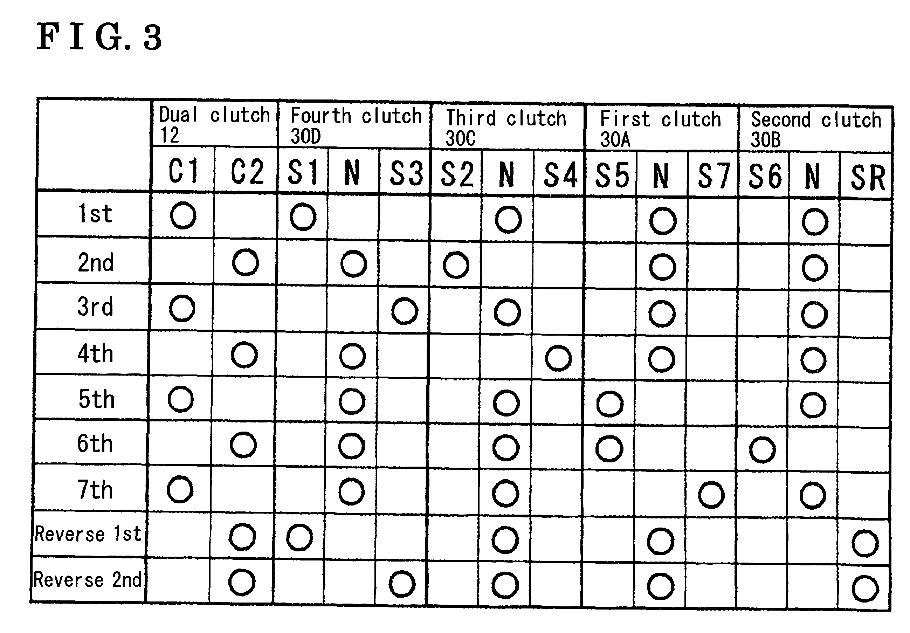

The control unit of the automatic dual clutch transmission apparatus of the first embodiment controls the first and second faction clutches C1 and C2 of the dual clutch 12 and the first, second, third, and fourth switching clutches 30A to 30D as shown in Fig.3 depending on an operational state of a vehicle such as an accelerator opening degree, a revolution speed of the engine, a vehicle speed and the likes. The first and second friction clutches C1 and C2 of the dual clutch 12 are disengaged and the first, second, third, and fourth switching clutches 30A to 30D are in the respective neutral positions in an inactive state. When the engine is started from a standstill and a shift lever (not shown) of the dual clutch transmission apparatus is put into a forward position, as shown in 1 st of Fig.3, the control unit forms the 1st shift stage by engaging the 1st shift stage engaging member S1 of the fourth switching clutch 30D with the sleeve M and placing the other switching clutches 30A, 30B, and 30C in the neutral positions. When the accelerator opening degree increases and the engine 10 exceeds the predetermined low revolution speed, the control unit gradually increases the engaging force of the first friction clutch C1 of the dual clutch 12 in response to the changes of the accelerator opening degree and thus the transfer torque of the driving shaft 11 is transmitted from the first friction clutch C1 to the output shaft 19 through the first input shaft 15, the 1st shift stage gear train 21a, 21b, the fourth switching clutch 30D, the first counter shaft 17, and the final transmission gear train 29a, 29b. Then, the vehicle starts driving in the 1st shift stage.

The accelerator opening degree increases for example and the operational state of the vehicle becomes suitable for driving in the 2nd shift stage, the control unit forms the 2nd shift stage by engaging the 2nd shift stage engaging member S2 of the third switching clutch 30C with the sleeve M. Subsequently, the control unit switches the dual clutch 12 to the second friction clutch C2 to shift into the 2nd shift stage and disengages the 1st shift stage engaging member S1 to put the operational state into the state shown in 2nd of Fig.3. In the 3rd and 4th shift stages, the control unit similarly selects the shift stage depending on the operational state of the vehicle and also alternately select the first and second friction clutch C or C2 to perform the driving in the suitable shift stage for the operation.

When the operational state of the vehicle becomes suitable for the driving in the 5th shift stage, the control unit forms the 5th shift stage by engaging the 5th shift stage engaging member S5 of the first switching clutch 30A with the corresponding sleeve M to connect the first input shaft 15 to the output shaft 19. Subsequently, the control unit switches the dual clutch 12 to the first friction clutch C1 to shift into the 5th shift stage and disengages the 4th shift stage engaging member S4 to put the operational state into the state shown in 5th of Fig.3. When the operational state of the vehicle becomes suitable for the driving in the 6th shift stage, the control unit forms the 6th shift stage by engaging the 6th shift stage engaging member S6 of the second switching clutch 30B with the corresponding sleeve M. Subsequently, the control unit switches the dual clutch 12 to the second friction clutch C2 to shift into the 6th shift stage. In this case, the control unit puts the operational state into the state shown in 6th of Fig.3 without disengaging the 5th shift stage engaging member S5. In this case, driving torque of the driving shaft 11 is transmitted from the second friction clutch C2 to the output shaft 19 through the second input shaft 16, the 6th shift stage gear train 25a, 25b (the driving gear 25a also serves as the 4th shift stage driving gear 24a), the intermediate transmission gear train 26a, 26b, the first input shaft 15 and the first switching clutch 30A.

When the operational state of the vehicle becomes suitable for the driving in the 7th shift stage, the control unit temporarily disengages the first and second friction clutches C1 and C2. Subsequently, the control unit switches the sleeve M of the switching clutch 30A to disengage with the 5th shift stage engaging member S5 and engage with the 7th shift stage engaging member S7 and disengages the 6th shift stage engaging member S6. Then, the control unit engages the first friction clutch C1 of the dual clutch 12 and puts the operational state into the state shown in 7th of Fig.3. In the 6th and 7th shift stages, the revolution speed of the output shaft 19 is increased and is faster than that of the driving shaft 11. Further, when the vehicle speed declines from a certain driving state or the similar situation occurs and the operational state of the vehicle becomes suitable for the driving in the lower shift stage, similarly, the control unit sequentially selects the lower shift stage depending on the operational state of the vehicle and switches the first and second friction clutches C1 and C2 alternately to shift the driving in the suitable shift stage for the operational state.

In the cases described above, the switching of each switching clutch in response to the shifting operation is performed when the dual clutch 12 is switched to one of the friction clutches and consequently the transfer torque falls down to zero because the unselect friction clutch C1 or C2, which transmits the driving force to each switching clutch 30A to 30D, is disengaged. Therefore, the shifting between each shift stage is smoothly implemented.

When the engine is started from a standstill and the shift lever of the dual clutch transmission apparatus is put into a reverse position, the control unit detects the change and forms the reverse 1st shift stage so that the 1 st shift stage engaging member S1 of the fourth switching clutch 30D and the reverse shift stage engaging member SR of the second switching clutch 30B engage with the corresponding sleeves M and the other clutches 30A sad 30C are placed in the neutral positions as shown in reverse 1st of Fig.3. When the accelerator opening degree increases for example and the engine 10 exceeds the predetermined low revolution speed, the control unit gradually increases the engaging force of the second friction clutch C2 of the dual clutch 12 in response to the changes of the accelerator opening degree. Thus, the driving torque of the driving shaft 11 is transmitted from the second friction clutch C2 to the output shaft 19, through the second input shaft 16, the reverse shift stage gear train 28a, 28b, 28c, (the driving gear 28a and the idle gear 28b also serves as the 2nd shift stage gear train 22a, 22b), the second counter shaft 18, the intermediate transmission gear train 26a, 26b (also used in the 6th shift stage), the 1st shift stage gear train 21a, 21b (also used in the 1st shift stage), the first counter shaft 17, and the final transmission gear train 29a, 29b. Then, the vehicle starts driving in the reverse 1st shift stage.

The accelerator opening degree increases for example and the operational state of the vehicle becomes suitable for the reverse 2nd shift stage, the control unit switches the sleeve M of the fourth switching clutch 30D to disengage with the 1st shift stage engaging member S1 and engage with the 3rd shift stage engaging member S3. Thus, the gear is shifted into the reverse 2nd shift stage in which the driving force is transmitted through the 3rd shift stage gear train 23a, 23b (also used in the forward 3rd shift stage) instead of the 1st shift stage gear train 21a, 21b. In the shifting, the switching of the dual clutch 12 is not implemented. However, it is necessary to switch the 1 st shift stage engaging member S1 to the 3rd shift stage engaging member S3 and the second clutch C2 has to be temporarily disengaged (transfer torque equals zero) therefore. Consequently, the torque transmission may be disconnected between the engine 10 and the output shaft 19 and the disconnection may lead to hindrance to smooth shifting. However, the accelerator opening degree is not enlarged in the reverse shift stages and thus the transfer torque is small. Therefore, this situation would not be problematic.

In the aforementioned first embodiment, the output shaft 19 extends toward the rear of the transmission apparatus and is arranged coaxially to the driving shaft 11 which connects to the engine 10, thus it is possible to obtain the dual clutch transmission apparatus suitable for a front engine rear wheel drive vehicle. The 4th shift stage gear train 24a, 24b transmits the power from the second input shaft 16 to the first counter shaft 17 in the 4th shift stage and the 6th shift stage gear train 25a, 25b transmits the power from the second input shaft 16 to the second counter shaft 18 in the 6th shift stage. The fourth and 6th shift stage gear trains 24a, 24b and 25a, 25b share a common driving gear 24a (25a). The forward 2nd shift stage gear train 22a, 22b transmits the power from the second input shaft 16 to the first counter shaft 17 in the 2nd shift stage and the reverse shift stage gear train 28a, 28b, 28c transmits the power from the second input shaft 16 to the second counter shaft 18 in the reverse shift stage. The 2nd shift stage gear train 22a, 22b and the reverse shift stage gear train 28a, 29b, 28c have a common driving gear 22a (28a) and a common driven (idle) gear 22b (28b). Further, the power is transmitted from the second counter shaft 18 to the first input shaft 15 by the common intermediate transmission gear train 26a, 26b in the 6th shift stage and the reverse shift stages. Furthermore, the first input shaft 15 and the output shaft 19 are detachably connected by the switching clutch 30A in the 5th shift stage. Therefore, it is possible to decrease the number of the gears (sixteen gears for the seven forward shift stages and the two reverse shift stages) used in the dual clutch type transmission apparatus with respect to the number of the shift stages. Moreover, each switching, from the forward 5th shift stage to the 7th shift stage, from the forward 6th shift stage to the reverse shift stage, from the forward 2nd shift stage to the 4th shift stage, and from the forward 1st shift stage to the 3rd shift stage, is implemented by one of the switching clutches 30A to 30D. Hence, the number of the clutches is decreased to the minimum necessary. Therefore, it is possible to obtain a lightweight dual clutch type transmission apparatus with a simple structure. Also, the two input shafts 15 and 16 and the two counter shafts 17 and 18 are provided and thus at least a part of the gears can be arranged in parallel in an axial direction and the length of the transmission apparatus is shorten along the axial direction enabling to assemble the dual clutch type transmission apparatus compactly. Further, the two input shafts 15 and 16 are coaxially arranged to reduce the dead space, it is possible to assemble the transmission apparatus even more compactly.

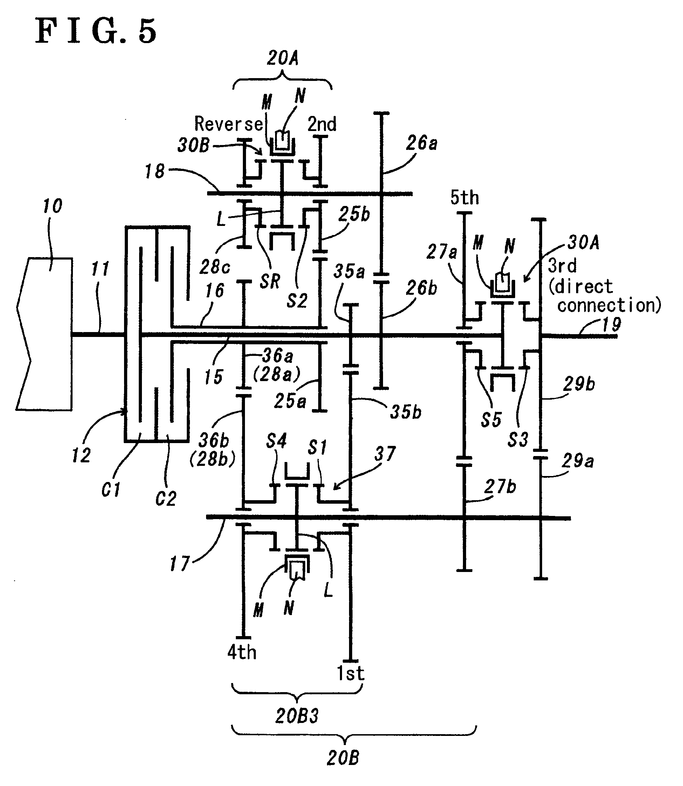

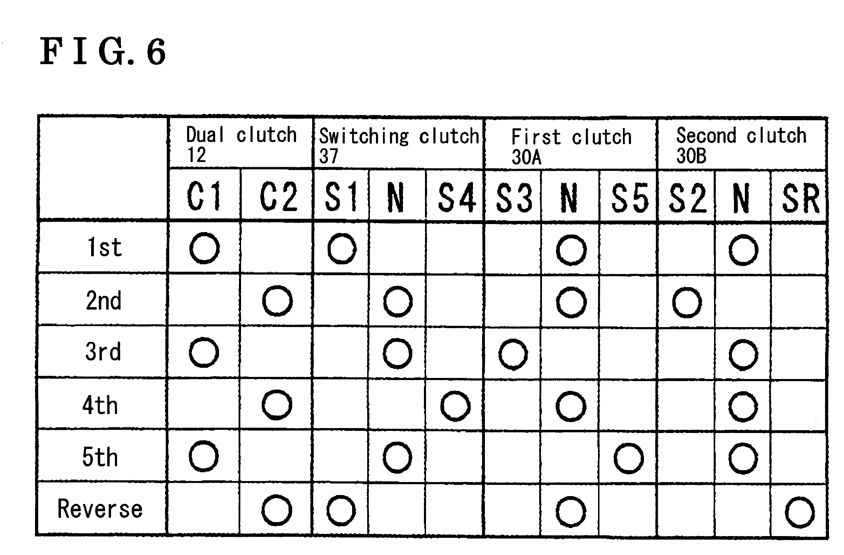

In the aforementioned first embodiment, the case in which the present invention is applied to the dual clutch transmission apparatus having the seven forward shift stages and the two reverse shift stages is described. However, the present invention is not limited to the type and it is possible to increase and decrease the number of the shift stages as necessary. Figs 5 and 6 show a case that the present invention is applied to a dual clutch transmission apparatus having five forward shift stages and one reverse shift stage. In the second embodiment, similarly to the first embodiment, the transmission apparatus has the first and second input shafts 15 and 16, which are provided coaxially relative to each other, and the counter shafts 17 and 18 which are respectively arranged in parallel with the first and second input shafts 15 and 16, and the output shaft 19. The output shaft 19 extends to the rear of the transmission apparatus coaxially with the first input shaft 15. Further, the transmission apparatus is provided with the dual clutch 12 having the first and second motion clutches C1 and C2 which are transmits the rotation of the driving shaft 11 to the input shafts 15 and 16 respectively. Furthermore, the transmission apparatus is provided with the first switching clutch 30A which detachably connects the first input shaft 15 to the output shaft 19, the first gear change mechanism 20A provided between the second input shaft 16 and the second counter shaft 18, the second gear change mechanism 20B provided between the first and second input shafts 15,16 and the first counter shaft 17, the intermediate transmission gear train 26a, 26b and the final transmission gear train 29a, 29b. The intermediate transmission gear train 26a and 26b connects the first input shaft 15 with the second counter shaft 18 and the final transmission gear train 29a and 29b connects the first counter shaft 17 to the output shaft 19. However, the first gear change mechanism 20A and the second gear change mechanism 20B of the second embodiment are different from those of the first embodiment

More specifically, the first gear change mechanism 20A of the second embodiment is different from that of the first embodiment in that a forward gear train which is composed of the driving gear 25a and the driven gear 25b functions as the 2nd shift stage gear train instead of the 6th shift stage gear train. The driving gear 25a is fixed to the second input shaft 16 and the driven gear 25b is rotatably provided at the second counter shaft 18.

The second gear change mechanism 20B of the second embodiment is composed of a fifth gear change mechanism 20B3 and a 5th shift stage gear train 27a, 27b. The fifth gear change mechanism 20B3 is composed of a 1st shift stage gear train (first gear train), which is composed of a driving gear 35a and a driven gear 35b and is provided between the first input shaft 15 and the first counter shaft 17, a 4th shift stage gear train (second gear train), which is composed of a driving gear 36a and a driven gear 36b and is provided between the second input shaft 16 and the first counter shaft 17, and a switch clutch 37. The driving gear 35a is fixed to the first input shaft 15 and the driven gear 35b is rotatably provided at the first counter shaft 17. The driving gear 36a (also serving as the driving gear 28a of the reverse shift stage gear train) is fixed to the second input shaft 16 and the driven gear 36b (also serving as the idle gear 28b of the reverse shift stage gear train) is rotatably provided in the first counter shaft 17.

The switching clutch 37 is a synchromesh mechanism which detachably connects the driven gears 35b and 36b to the first counter shaft 17 either alternately or simultaneously, The structure of the switching clutch 37 is identical to that of the second switching clutch 30B of the first embodiment with the exception that a clutch hub L is fixed to the first counter shaft 17 and a first engaging member S 1 and a fourth engaging member S4 are respectively fixed to the driving gear 35b and the driven gear 36b. The 5th shift stage gear train 27a, 27b corresponds to the 7th shift stage gear train 27a, 27b of the first embodiment. The other structure of the second embodiment is identical to that of the first embodiment.

In the second embodiment, the control unit of the dual clutch transmission apparatus controls the first and second friction clutches C1 and C2 of the dual clutch 12, the first, second switching clutches 30.A, and 30B, the switching clutch 37 as shown in Fig.6 depending on the operational state of the vehicle such as the accelerator opening degree, the revolution speed of the engine, the vehicle speed and the likes. In the second embodiment, the fust input shaft 15 is directly connected to the output shaft 19 in the 3rd shift stage, and the revolution speed of the output shaft 19 is increased and becomes faster than that of driving shaft 11 in the 4th and 5th shift stages. The other parts of the operation will be easily inferred from the first embodiment, thus the details of the description will be omitted,

In the second embodiment, the 4th shift stage gear train 36a, 36b transmits the power from the second input shaft 16 to the first counter shaft 17 in the 4th shift stage and the reverse shift gear train 28a, 28b, 28c transmits the power from the second input force 16 to the second counter shaft 18 in the reverse shift stage. The 4th and reverse shift stage gear trains 36a, 36b and 28a, 28b, 28c share a common driving gear 36a (28a) and a common driven (idle) gear 36b and 28b. Further the power is transmitted from the second counter shaft 18 to the first input shaft 15 by the common intermediate transmission gear train 26a, 26b in the 2nd shift stage and the reverse shift stage. Furthermore, the first input shaft 15 and the output shaft 19 are detachably connected by the switching clutch 30A, in the 3rd shift stage. Therefore, similarly to the first embodiment, it is possible to decrease the number of the gears (thirteen gears for the five forward shift stages and single reverse shift stage) used in the dual clutch type transmission apparatus with respect to the number of the shift stages. Moreover, each switching, from the forward 3rd shift stage to the 5th shift stage, from the forward 2nd shift stage to the reverse shift stage, from the forward 1st shift stage to the 4th shift stage, and from the forward 1st shift stage to the 4th shift stage, is implemented by one of the switching clutch 30A, the switching clutch 30B and the switching clutch 37. Hence, the number of the clutches is decreased to the minimum necessary. Therefore, similarly to the first embodiment, it is possible to obtain a lightweight dual clutch type transmission apparatus with a simple structure. Also, the two input shafts 15 and 16 and the two counter shafts 17 and 18 are provided and thus at least a part of the gears can be arranged in parallel along an axial direction and the length of the transmission apparatus is shorten along the axial direction enabling to assemble the dual clutch type transmission apparatus compactly.

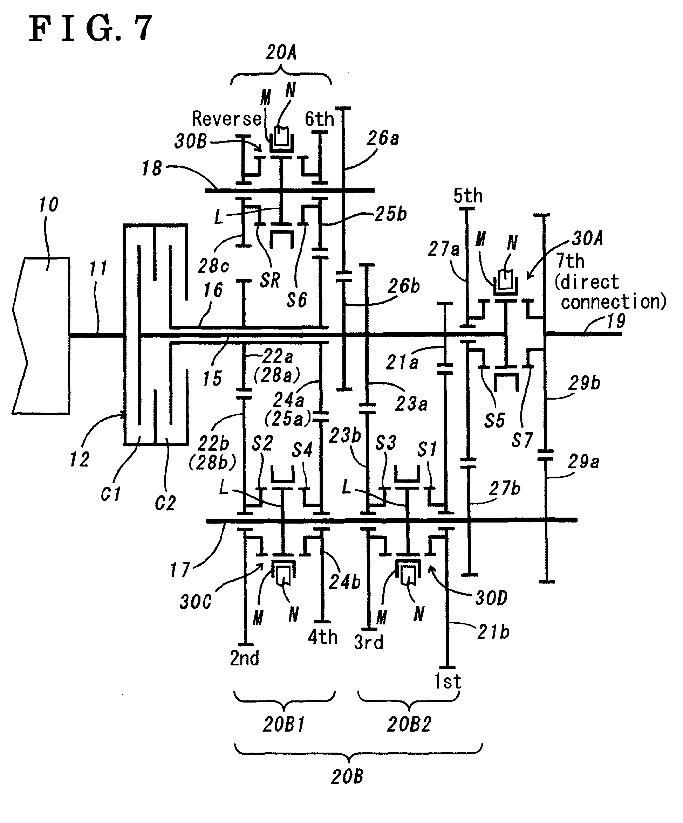

In the above-mentioned first and second embodiments, the case in which the first input shaft 15 and the output shaft 19 are directly connected in the intermediate shift stage of the forward gear change mechanism (the 5th shift stage for the seven forward stages and the 3rd shift stage for the five forward stages) is described. However, the present invention is not limited to this structure, and the first input shaft 15 and the output shaft 19 may be directly connected in a highest shift stage or (or a lowest shift stage). Fig. 7 shows an example in which the first input shaft 15 and the output shaft 19 are directly connected in the 7th shift stage in the dual clutch transmission apparatus having the seven forward shift stages and the two reverse shirt stages. In the third embodiment, the structure of the dual clutch transmission apparatus is identical to that of the first embodiment with the exception that a forward gear train 27a, 27b functions as the 5th shift stage gear train, and the driving gear 27a is rotatably provided in the rear portion of the first input shaft 15, a 5th shift stage engaging member S5 and a 7th shift stage engaging member S7of a switching clutch 30A are respectively fixed to the 5th shift stage driving gear 27a and the final driven gear 29b, and the number of the teeth of the gears is different for that of the first embodiment due to difference of the configuration. In the third embodiment, similarly to the first embodiment, the control unit of the dual clutch transmission apparatus controls the first and second friction clutches C1 and C2, the first and second switching clutches 30A and 30B, and the switching clutch 37.

In the third embodiment, similarly to the first embodiment, it is still possible to decrease the number of the gears with respect to the number of the shift stages and also decease the number of the clutches to the minimum necessary. Therefore, it is possible to obtain the lightweight dual clutch transmission apparatus with a simple structure. Also, it is possible to obtain the dual clutch transmission apparatus which is assembled compactly as the length of the transmission apparatus can be shortened along the axial direction. Additionally, it is possible to assemble the transmission apparatus even more compactly by coaxially arranging the two input shafts 15 and 16. As describe above, it is possible to decrease and increase the number of the gear stages as necessary in the third embodiment

In the embodiments described above, the case in which the two input shafts 15 and 16 are coaxially arranged is described, however, the present invention is not limited to this configuration. The two input shafts 15 and 16 may be arranged so as to be apart in parallel. Even in the case, it is still possible to decrease the number of the gears with respect to the number of the shift stages and also decease the number of the clutches to the minimum necessary. Therefore, it is possible to obtain the lightweight dual clutch transmission apparatus with a simple structure. Also, it is possible to obtain the dual clutch transmission apparatus which is assembled compactly as the length of the transmission apparatus can be shortened along the axial direction.

According to the aforementioned embodiment of the invention, the dead space can be reduced by arranging the first input shaft and the second input shaft coaxially. Therefore, the dual clutch type transmission apparatus can be assembled even more compactly.

According to the aforementioned embodiment of the invention, the multiple gear trains of the first gear change mechanism share multiple common driving gears with the multiple gear trains of the third gear change mechanism. Therefore, the structure of the dual clutch type transmission apparatus can be simplified and the weight of the dual clutch transmission apparatus can be reduced.

According to the aforementioned embodiment of the invention, the fourth gear change mechanism has a dual shift stage mechanism. Therefore, it is possible to increase the number of the shift stages.

According to the aforementioned embodiment of the invention, a gear train is provided for transmitting the rotation of the first input shaft to the output shaft by use of the switching clutch which detachably connects the first input shaft and the output shaft. Hence, it is possible to increase the number of the shift stages without providing additional switching clutches.

According to the aforementioned embodiment of the invention, it is possible to further simplify the structure of the dual clutch transmission apparatus in the case that the second gear change mechanism is a dual shift stage mechanism.

The principles, of the preferred embodiments and mode of operation of the present invention have been described in the foregoing specification. However, the invention, which is intended to be protected, is not to be construed as limited to the particular embodiment disclosed. Further, the embodiment described herein are to be regarded as illustrative rather than restrictive. Variations and changes may be made by others, and equivalents employed, without departing from the spirit of the present invention. Accordingly, it is expressly intended that all such variations, changes and equivalents that fall within the spirit and scope of the present invention as defined in the claims, be embraced thereby.

## Claims

1. A dual clutch transmission apparatus comprising:
a first input shaft (15);
a second input shaft (16) arranged in parallel with the first input shaft;
a first counter shaft (17) arranged in parallel with the first input shaft;
a second counter shaft (18) arranged in parallel with the first input shaft;
an output shaft (19) arranged coaxially with the first input shaft;
a dual, clutch (12) including:
a first clutch (C1) transmitting rotation of a driving shaft (11) which is driven by a power plant (10) to the first input shaft;
a second clutch (C2) transmitting the rotation of the driving shaft to the second input shaft,
a final transmission gear train (29a, 29b) transmitting rotation of the first counter shaft to the output shaft, is **characterized in that** the dual clutch transmission apparatus further comprising:
a first gear change mechanism (20A) including multiple gear trains and provided between the second input shaft and the second counter shaft;
a second gear change mechanism (20B) including multiple gear trains and provided between the first input shaft, the second input shaft and the first counter shaft;
a switching clutch (30A) detachably connecting the first input shaft to the output shaft; and
an intermediate transmission gear train (26a, 26b) transmitting rotation between the first input shaft and the second counter shaft, wherein the first gear change mechanism and the second gear change mechanism share a common driving gear (22a (28a), 24a (25a), 36a (28a)) provided at the second input shaft.

2. A dual clutch transmission apparatus according to claim 1, wherein the second input shaft (15) is of hollow shaped and the first input shaft is provided so as to penetrate the hollow-shaped second input shaft (16) rotatably and coaxially.

3. A dual clutch transmission apparatus according to any one of claim 1 and claim 2, wherein the second gear change mechanism (20B) includes a third gear change mechanism (20B1) provided between the second input shaft (16) and the first counter shaft (17) and a fourth gear change mechanism (20B2) provided between the first input shaft (15) and the first counter shaft, multiple gear trains of the third gear change mechanism and the multiple gear trains of the first gear change mechanism (20A) share a common driving gear (22a (28a), 22b (28b), 24a (25a)) provided at the second input shaft.

4. A dual clutch transmission apparatus according to claim 3, wherein the fourth gear change mechanism (20B2) is a dual shift stage transmission mechanism.

5. A dual clutch transmission apparatus according to any one of claim 3 and claim 4, wherein the second gear change mechanism (20B) further includes a gear train (27a, 27b) switched by a switching clutch (30A) to transmit rotation of the first input shaft (15) to the first counter shaft (17).

6. A dual clutch transmission apparatus according to any of claim 1 and claim 2, wherein the second gear change mechanism (20B) is composed of a first gear train (35a, 35b) provided between the first input shaft (15) and the first counter shaft (17), a second gear train (36a, 36b) provided between the second input shaft (16) and the first counter shaft, and a switching clutch (37) switching a transmission state of rotation between transmission from the first input shaft to the first counter shaft by the first gear train and transmission from the second input shaft to the first counter shaft by the second gear train, a gear train (28a, 28b, 28c) of the first gear change mechanism (20A) and the second gear train share a common gear (36a (29a), 36b(28b)) provided at the second input shaft.

7. A dual clutch transmission apparatus according to claim 6, wherein the second gear change mechanism (20B) further includes a gear train (27a, 27b) switched by a switching clutch (30A) to transmit rotation of the first input shaft (15) to the first counter shaft (17).
